Europäisches Patentamt

European Patent Office

Office européen des brevets

(19)

(11) Numéro de publication : **0 119 922**
**B1**

(12) # FASCICULE DE BREVET EUROPÉEN

(45) Date de publication du fascicule du brevet :
06.05.87

(51) Int. Cl.⁴ : **B 62 D  5/22**

(21) Numéro de dépôt : **84400520.7**

(22) Date de dépôt : **14.03.84**

(54) Direction assistée à pignon et crémaillère, plus particulièrement du type à sortie centrale.

(30) Priorité : **22.03.83 ES 521288**
**21.09.83 ES 525777**

(43) Date de publication de la demande :
**26.09.84 Bulletin 84/39**

(45) Mention de la délivrance du brevet :
**06.05.87 Bulletin 87/19**

(84) Etats contractants désignés :
**DE FR GB IT**

(56) Documents cités :
**DE-A- 2 024 674**
**DE-C- 1 917 789**
**US-A- 3 312 148**

(73) Titulaire : **BENDIX ESPANA S.A.**
**Balmes 243**
**Barcelona 6 (ES)**

(72) Inventeur : **Estela Rosell, Jorge**
**c/Escornalbou 23 1o 1a**
**Barcelona 26 (ES)**

(74) Mandataire : **Le Moenner, Gabriel et al**
**SERVICE BREVETS BENDIX 44, Rue François 1er**
**F-75008 Paris (FR)**

## Description

La présente invention concerne les directions assistées pour véhicules, du type à sortie centrale, comprenant un corps formant logement pour un ensemble coopérant à pignon et crémaillère, au moins un cylindre prolongeant le corps dans une direction parallèle à la crémaillère, au moins un premier moyen de piston disposé dans le cylindre et relié à la crémaillère par une tige, des moyens pour admettre sélectivement un fluide sous pression dans le cylindre, au moins du côté du moyen de piston opposé à la tige, et des moyens de sortie pour relier l'ensemble crémaillère/tige/premier moyen de piston à un embiellage d'actionnement de roues orientables. Une telle direction est par ex. décrite dans US-A-3 312 148.

Les directions assistées à pignon et crémaillère comprennent généralement un moyen de piston à double effet associé à la crémaillère et coulissant dans un cylindre unique disposé d'un côté de cette crémaillère. Le plus souvent, les biellettes d'actionnement de la tringlerie de direction sont reliées respectivement à l'extrémité de la crémaillère opposée au moyen de piston et à une extrémité de la tige du moyen de piston se prolongeant au-delà de celui-ci et traversant la paroi frontale du cylindre opposée à la crémaillère. On connaît également des dispositifs de direction assistée du type dit à sortie centrale, auxquels se réfère la présente invention, dans lesquels les biellettes d'actionnement sont reliées à l'ensemble crémaillère-tige de piston en une zone intermédiaire de cet ensemble, soit au niveau de la tige, comme dans le document FR-A-1 108 056, soit au niveau du piston lui-même (allongé), comme dans le document US-A-3 312 148. Toutefois, ainsi qu'il apparaît des deux documents en questions, l'aménagement des moyens de sortie en une zone intermédiaire nécessitent, pour la reprise des efforts, des moyens de piston du type coulissant, ce qui impose, dans un système d'une longueur axiale importante, d'une part, un usinage précis de l'alésage du cylindre et, d'autre part, un alignement, également très précis, des axes de la crémaillère, de la tige de piston et du cylindre, ce qui contribue à obérer grandement les coûts de production de tels dispositifs.

La présente invention a pour objet de proposer un agencement de direction assistée du type susmentionné, de structure simplifiée, compacte et allégée, permettant des coûts de fabrication notablement réduits convenant à des productions en grande série, tout en garantissant un fonctionnement fiable, et offrant une grande versatilité de variantes de réalisation.

Pour ce faire. selon la présente invention, le cylindre est constitué d'un élément en forme de cloche cylindrique, réalisé avantageusement par emboutissage profond, rapporté sur le corps, le premier moyen de piston d'assistance étant constitué d'une membrane roulante reliée, par sa périphérie, à l'élément en forme de cloche cylindrique, et d'un organe support tubulaire fixé à la tige de connection à la crémaillère, et coaxial à cette tige, les moyens de sortie étant reliés à la crémaillère et traversant une paroi latérale du corps.

Un tel agencement permet de supprimer la liaison à coulissement entre le moyen de piston et son cylindre et autorise donc la fabrication des éléments en forme de cloche cylindrique formant cylindre par simple emboutissage, sans nécessiter d'usinages ultérieurs, de même que pour l'organe de support tubulaire, en supprimant ainsi tout problème d'alignement, et la reprise des efforts s'effectuant au niveau de la crémaillère, le sous-ensemble constituant la partie d'actionnement hydraulique peut être réalisé avec une structure allégée contribuant à la réduction des coûts du système sans nuire à sa robustesse.

Les documents DE-C-1 917 789 et DE-A-2 024 674 décrivent des directions assistées comportant un moyen de piston du type à membrane roulante délimitant une chambre de pression annulaire de section efficace réduite délimitée par ailleurs par le corps et par la tige de piston guidée à coulissement étanche dans le corps, les moyens de sortie étant reliés au moyen de piston.

Selon une caractéristique additionnelle de l'invention, la crémaillère est guidée axialement dans une zone centrale de profil interne correspondant du corps, l'ensemble organe support tubulaire/tige de piston étant monté en porte-à-faux sur l'extrémité adjacente de la crémaillère.

Selon une autre caractéristique additionnelle de l'invention, la crémaillère comprend une face d'appui perpendiculaire à sa zone dentée et coulissant contre une paroi correspondante du corps.

Un tel agencement permet de simplifier encore davantage la fabrication du système et d'en réduire les coûts en limitant au strict minimum les surfaces à usiner avec précision.

L'agencement de direction assistée selon l'invention autorise de plus un agencement de commande du type à double circuit particulièrement compact et de faibles coûts de fabrication.

Ainsi, selon une caractéristique additionnelle de l'invention, la direction assistée, du type à sortie centrale, comprend une tige creuse reliant le premier moyen de piston à membrane roulante, à la crémaillère, et un second moyen de piston à membrane roulante, à la crémaillère, et un second moyen de piston porté par ladite tige creuse et coulissant de façon étanche par rapport à un élément stationnaire central.

Selon une autre caractéristique additionnelle de l'invention, l'élément stationnaire central, avantageusement creux. est connecté par un raccord articulable à l'élément en forme de cloche cylindrique et s'étend longitudinalement au travers de la crémaillère.

D'autres caractéristiques et avantages de la présente invention ressortiront de la description suivante de modes de réalisation, donnés à titre illustratif mais nullement limitatif, faite en relation avec les dessins annexés, sur lesquels :

la Figure 1 représente, en coupe longitudinale, un premier mode de réalisation d'une direction assistée à pignon et crémaillère selon l'invention ;

la Figure 2, 3 et 4 sont des vues en coupes transversales respectives suivant les plans de coupe II-II, III-III, IV-IV de la Fig. 1 ;

la Figure 5 est une vue, partiellement en coupe longitudinale, d'une variante de réalisation d'une direction assistée selon les figures précédentes ;

la Figure 6 est une vue, partiellement en coupe longitudinale, d'un premier mode de réalisation d'une direction assistée à double circuit selon l'invention ;

la Figure 7 est une vue en coupe transversale suivant le plan de coupe VII-VII de la Fig. 6 ;

la Figure 8 est une vue, également partiellement en coupe longitudinale, d'un autre mode de réalisation d'une direction assistée à double circuit selon l'invention ; et

la Figure 9 est une vue en coupe transversale suivant la ligne IX-IX de la Fig. 8.

Dans la description qui va suivre et sur les dessins, les éléments identiques ou analogues dans les différents modes de réalisation portent les mêmes chiffres de référence, éventuellement indicés.

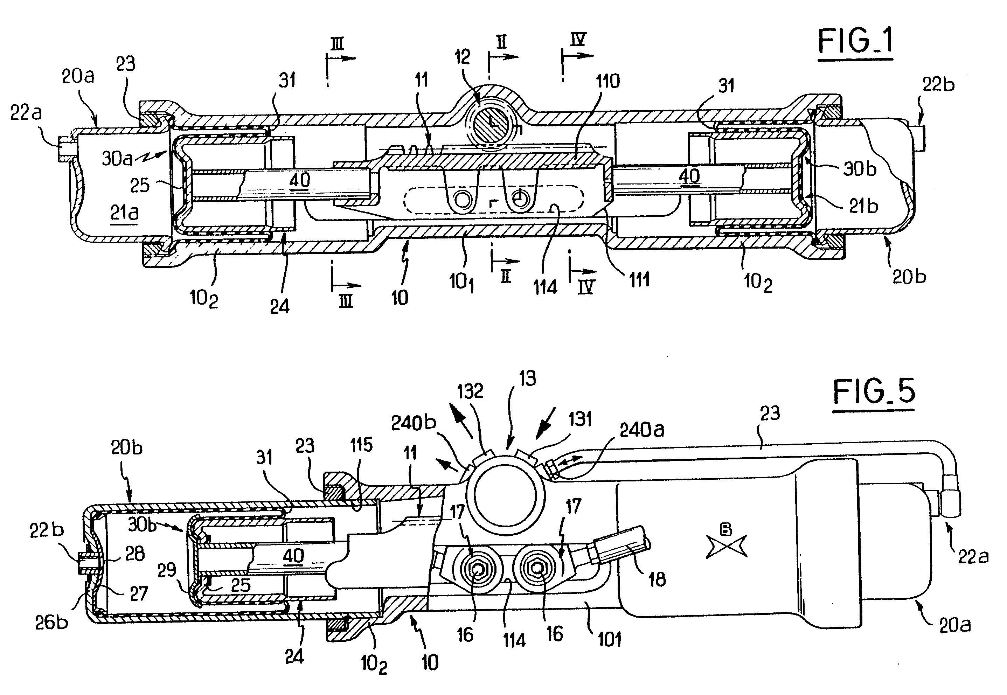

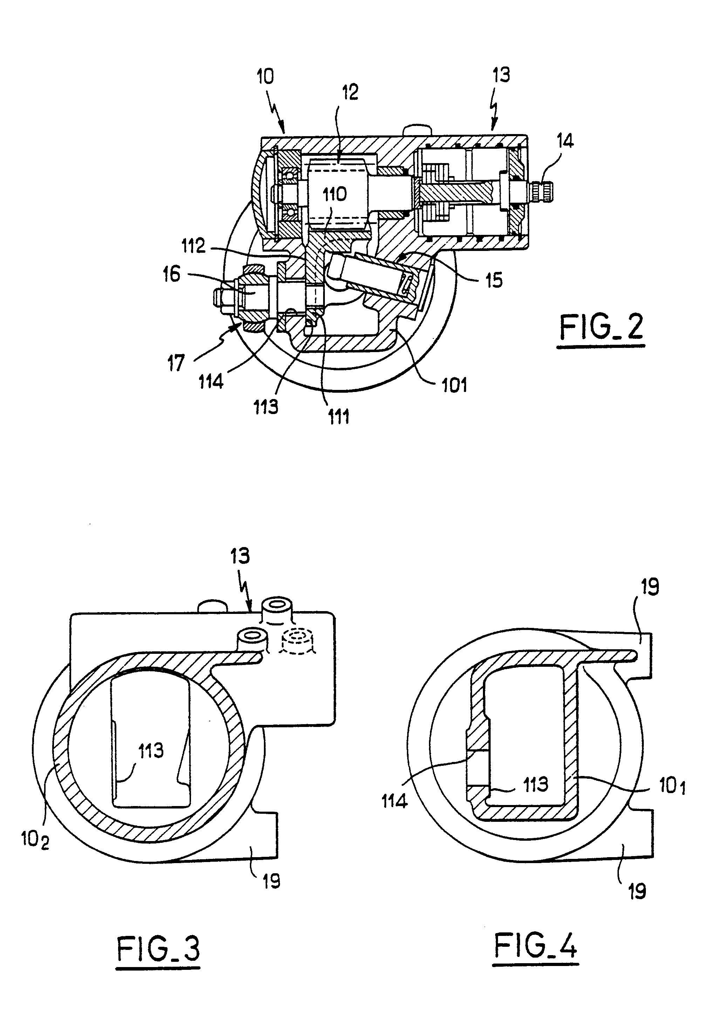

La direction assistée à sortie centrale représentée sur la Fig. 1 comprend généralement un corps ou boîtier de direction 10 allongé, creux, venu de fonderie, comportant, comme on le voit mieux sur les Fig. 2 à 4, une partie centrale $10_1$ au profil intérieur sensiblement parallélépipédique, et deux parties d'extrémité cylindriques $10_2$. Dans le corps 10 est monté un bloc crémaillère 11 de profil transversal (Fig. 2) en forme de L, définissant ainsi une aile 110 formant les dentures de la crémaillère et une aile orthogonale 111 comportant une surface extérieure plane dressée 112 portant en coulissement contre une surface intérieure également plane dressée 113 de la paroi de la partie centrale $10_1$ du corps 10. La denture de crémaillère de l'aile 110 coopère en engrènement avec un pignon 12 tourillonnant dans le corps 10 et actionné, via un accouplement à course morte et une valve de distribution 13, également avantageusement montée dans le corps 10, par un organe d'entrée 14 destiné à être connecté à la colonne de direction d'un véhicule, le pignon 12 étant avantageusement directement connecté à l'élément de sortie de la valve 13. L'aile 110 est en appui, par sa face opposée à la denture de crémaillère, contre un dispositif d'appui élastique 15 monté dans un alésage du corps 10 ayant un axe s'étendant dans un plan perpendiculaire à l'axe des tiges 40 et orienté suivant une direction inscrite dans le quadrant entre les deux ailes de la crémaillère 11. Selon un aspect de l'invention, la paroi de la partie centrale $10_1$ du corps 10 formant la face d'appui plane 113 est percée d'une ouverture allongée 114 au travers de laquelle s'étendent à coulissement des éléments d'axes 16 fixés à l'aile 111 et dont les portions s'étendant hors du corps 10 supportent des raccords articulés 17 pour leur raccordement à des biellettes 18 de commande en orientation des roues orientables du véhicule.

Conformément à un aspect de l'invention, dans les extrémités évasées des zones d'extrémité cylindriques $10_2$ du corps 10 sont montés, coaxialement au corps 10, des éléments en forme de cloche cylindrique 20a, 20b, respectivement, réalisés avantageusement par emboutissage profond en acier ou en alliage léger de façon à définir intérieurement chacun une chambre de piston 21a ou 21b pour un moyen de piston 30a ou 30b, chaque élément en forme de cloche cylindrique 20a, 20b étant pourvu en bout d'un embout 22a, 22b pour le raccordement, via une tubulure telle que 23, à une sortie de distribution 240a ou 240b, respectivement, de la valve 13, par ailleurs pourvue, classiquement, d'embouts d'entrée 131 et de retour 132 destinés à être connectés respectivement à une source de fluide sous pression et à une bâche (non représentés).

Conformément à l'invention, chaque moyen de piston 30a ou 30b est constitué d'une membrane roulante 31 solidarisée au bloc crémaillère 11 par une tige 40, avantageusement creuse. Dans le mode de réalisation de la Fig. 1, la périphérie extérieure de la membrane 31 est montée entre l'épaulement du fond de l'évasement d'extrémité de la partie d'extrémité $10_2$ du corps 10 et le bord annulaire rabattu extérieurement de l'élément en forme de cloche 20a ou 20b, ce dernier étant maintenu dans l'évasement d'extrémité de la zone d'extrémité $10_2$ par une bague filetée 23. Dans ce mode de réalisation de la Fig. 1, la solidarisation entre la membrane 31 et la tige 40 s'effectue au moyen d'un organe support tubulaire 24 coaxial à la tige 40 et fixé à cette dernière par son fond en forme de cuvette 25, sur la totalité de la surface extérieure duquel est appliquée la zone centrale conformée de la membrane 31. La tige 40 est fixée sur l'extrémité du bloc crémaillère 11 soit par emmanchement, comme représenté sur la partie gauche de la Fig. 1, soit par rivetage ou vissage en bout comme représenté sur la partie droite de cette même Fig. 1. Ainsi, conformément à l'objet de l'invention, les moyens de piston 30a ou 30b ne comportent aucune partie en coulissement étanche avec le corps 10 ou les éléments en forme de cloche d'extrémité 20a ou 20b, le moyen de piston étant supporté en porteà-faux, via la tige 40, sur le bloc crémaillère 110 qui lui, par contre, est guidé et maintenu en coulissement axial contre la face intérieure 113 du corps 10, ce qui permet de limiter les usinages précis aux seules faces de coulissement en contact 112 et 113. On notera que chaque organe support tubulaire 24 forme surface d'appui pour la membrane roulante associée 31, évitant ainsi les risques d'endommagement de cette dernière. On notera, par ailleurs, sur les Fig. 3 et 4, les bossages 19 du corps 10 servant au montage de ce dernier sur le châssis du véhicule.

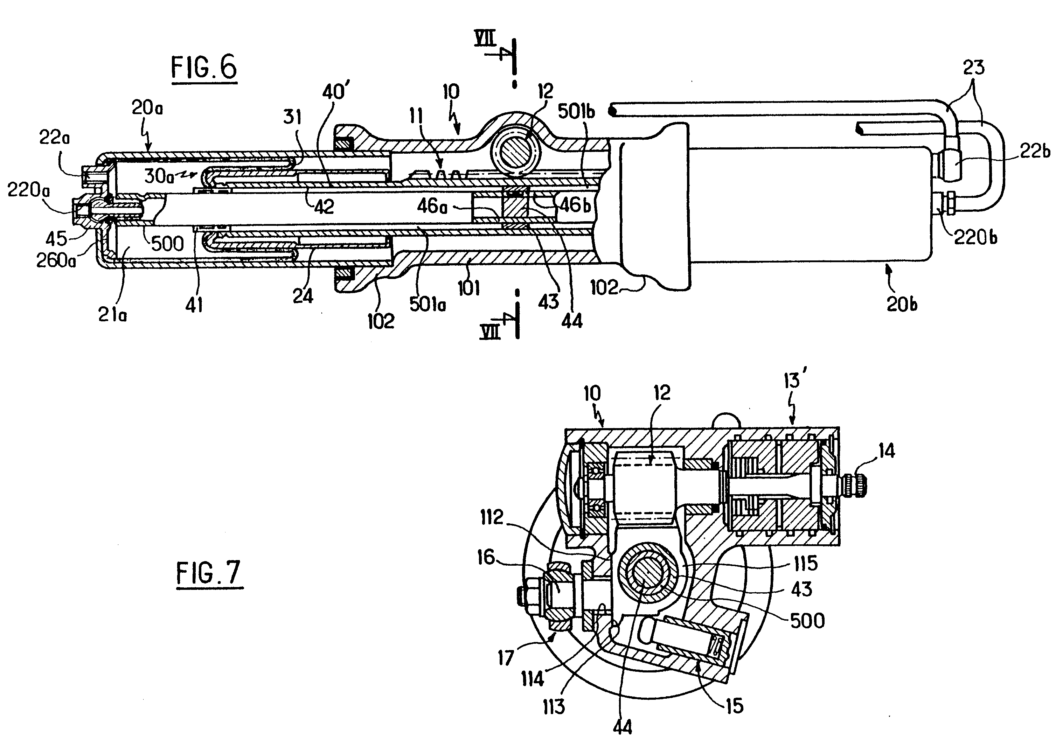

Dans le mode de réalisation de la Fig. 5, chaque élément en forme de cloche cylindrique 20a ou 20b est emmanché dans un alésage 115 de diamètre élargi formé dans la partie d'extrémité cylindrique 10$_2$ du corps 10 et est verrouillé en place par une bague filetée extérieurement 23, la périphérie de la membrane étant, ici, maintenue contre la périphérie du fond 26a ou 26b de l'élément cylindrique 20a ou 20b par une plaque de fond élastique profilée 27 percée d'un orifice 20 aligné avec l'embout de raccordement 22a ou 22b. Dans ce mode de réalisation, la tige 40 s'étend au travers d'un orifice central formé dans le fond 25 de l'organe support tubulaire 24 et la périphérie intérieure de la membrane 31 et plaqué contre ce fond 25 par une plaque extérieure profilée 29 solidaire de l'extrémité extérieure de la tige 40. Le dispositif de la Fig. 5 est par ailleurs entièrement identique à celui décrit précédemment en relation avec les Fig. 1 à 4.

Le mode de réalisation de la Fig. 6 correspond à bien des égards au mode de réalisation de la Fig. 5 qui vient d'être décrit. Si le bloc crémaillère 11 comporte toujours une face plane 112 perpendiculaire à la denture de crémaillère et coulissant en appui sur une face plane dressée correspondante 113 de la partie centrale 10$_1$ du corps 10 de la direction assistée, le bloc crémaillère présente, ici, une configuration générale cylindrique et comporte notamment deux prolongements axiaux tubulaires 40' reliés chacun à la partie de fond annulaire de l'organe support tubulaire 24 du premier moyen de piston 30a ou 30b à membrane roulante 31 par l'intermédiaire d'une douille 41 munie de joints d'étanchéité coulissants et coulissant sur une tige creuse centrale 500 traversant l'ensemble du dispositif de direction assistée. Comme on le voit bien sur la Fig. 6, le bloc crémaillère 11 (y compris les prolongations tubulaires 40') est formé avec un alésage central traversant 42 avec lequel coopère en coulissement étanche une structure annulaire d'étanchéité 43 fixée périphériquement sur la zone médiane de la tige creuse 500. Au niveau de cette zone médiane, la tige creuse 500 est divisée intérieurement en deux canaux distincts et axialement opposés par un bloc de séparation étanche 44. Pour s'affranchir des problèmes de désalignement éventuels entre le bloc crémaillère 11 et les éléments en forme de cloche cylindrique d'extrémité 20a, 20b, le tube guide fixe central 500 est relié au fond rapporté 260a ou 260b de ces éléments en forme de cloche cylindrique 20a ou 20b (et servant, dans ce mode de réalisation, au montage de la périphérie externe de la membrane 31) au moyen d'un raccord creux à rotule 45 verrouillable dans la position de montage adéquate et aligné avec un embout 220a, 220b du fond 260a ou 260b servant de raccordement à la paire d'embouts de distribution correspondant 240a, 240'a ou 240b, 240'b de la valve de distribution 13', conçue du type à double circuit également pour fournir séquentiellement ou de façon complémentaire en opposition du fluide de travail sous pression dans la chambre primaire annulaire 501a ou 501b définie entre le tube stationnaire 500 et la paroi de l'alésage 42 du bloc crémaillère pour solliciter le manchon ou second moyen de piston 41 vers l'extérieur, ou dans les chambres secondaires 21a, 21b définies dans les extrémités des éléments en forme de cloche cylindrique 20a ou 20b pour solliciter le premier moyen de piston à membrane 31 vers l'intérieur. A cet effet, de part et d'autre de la cloison intérieure étanche 44, le tube stationnaire 500 comporte des ouvertures radiales 46a ou 46b pour mettre en communication la chambre primaire correspondante 501a ou 501b avec le raccord associé 220a ou 220b via le canal intérieur correspondant formé par le tube 500. Selon un aspect de l'invention, on notera que le mode de réalisation de la Fig. 6 présente un encombrement opérationnel réduit correspondant à 6 × L/2, L/2 étant la demi-course globale de débattement des organes de sortie 16, 17, de part et d'autre de la position centrale de repos.

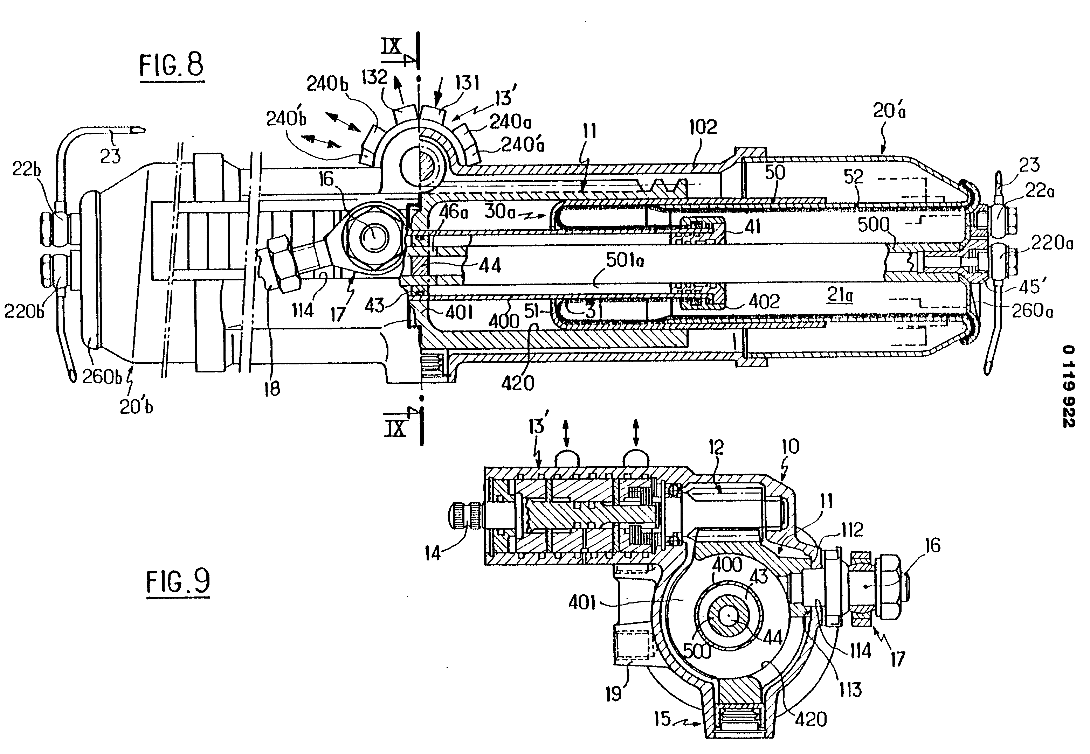

Le mode de réalisation représenté sur les Fig. 8 et 9 permet de réduire encore cet encombrement opérationnel global à une valeur 4 × L/2. Cette réduction est obtenue en intégrant partiellement le premier moyen de piston à membrane roulante 30a (30b) dans le bloc crémaillère lui-même. Comme on le voit, le bloc crémaillère 11 présente également ici une configuration générale cylindrique, mais de diamètre élargi et de longueur se réduisant à la longueur de denture de la crémaillère, l'alésage intérieur 420 du bloc crémaillère étant interrompu dans sa zone médiane par un élément de cloison annulaire 401 auquel est relié une tige tubulaire 400 portant, à son extrémité extérieure, le manchon coulissant 41 formant le second moyen de piston en coulissement sur la tige creuse centrale stationnaire 500. Dans ce mode de réalisation, la périphérie intérieure de la membrane 31 est fixée sur le tube 400, au droit de la douille 41, au moyen d'un capuchon annulaire 402 et cette membrane 31 s'étend en repliement dans l'espace annulaire formé dans l'alésage 420 par le tube 400, le premier moyen de piston constitué par cette membrane 31 comportant une paroi de piston tubulaire 50 coulissant par sa périphérie externe dans l'alésage 420 et pourvu, à son extrémité intérieure, d'une partie rabattue 51 protégeant et épousant le repli de la membrane 31 dont la périphérie extérieure est pincée entre l'extrémité extérieure de l'élément en forme de cloche cylindrique 20'a ou 20'b et un fond rapporté 260'a, 260'b, portant l'embout 22a ou 22b et servant à la fixation, avec au moins un degré de liberté initiale, de l'extrémité de la tige creuse 500 par l'intermédiaire d'un raccord conique 45' portant l'autre embout 220a ou 220b. Le coulissement de la plaque 50 est également assuré, intérieurement, sur un manchon cylindrique 52 formé par repliement vers l'intérieur de la tôle de l'élément en forme de cloche cylindrique 20'a, 20'b, l'extension axiale de ce tube intérieur 52 étant telle qu'il se prolonge jusque dans l'alésage 420 du bloc crémaillère 11 lorsque ce dernier se trouve en position centrale de repos.

## Revendications

1. Direction assistée, du type à sortie centrale, comprenant : un corps (10) formant logement pour un ensemble coopérant à pignon (12) et crémaillère (11), au moins un cylindre (20 ; 20') prolongeant le corps dans une direction parallèle à la crémaillère, au moins un premier moyen de piston (30) disposé dans le cylindre et relié à la crémaillère par une tige (40 ; 40' ; 400), des moyens (13 ; 13') pour admettre sélectivement un fluide sous-pression dans le cylindre, au moins du côté du premier moyen de piston opposé à la tige, et des moyens de sortie (16, 17) pour relier l'ensemble crémaillère (11)/tige (40 ; 40' ; 400)/premier moyen de piston (30) à un embiellage (18) d'actionnement de roues orientables, caractérisé en ce que le cylindre est constitué d'un élément en forme de cloche cylindrique (20 ; 20') rapporté sur une extrémité du corps (10), le premier moyen de piston (30) étant constitué d'une membrane roulante (31), reliée par sa périphérie à l'élément en forme de cloche cylindrique (20), et d'un organe support tubulaire (24) fixé à la tige (40 ; 40'; 400) et coaxial à celle-ci, et en ce que les moyens de sortie (16, 17) sont reliés à la crémaillère (11) et traversent une paroi latérale du corps (10).

2. Direction assistée selon la revendication 1, caractérisée en ce qu'elle comprend une paire (30a, 30b) de tels premiers moyens de pistons disposés en opposition, chacun dans un dit élément en forme de cloche (20a, 20b), de part et d'autre de la crémaillère (11).

3. Direction assistée selon la revendication 1 ou la revendication 2, caractérisée en ce que l'élément en forme de cloche cylindrique (20) est réalisé par emboutissage profond.

4. Direction assistée selon la revendication 2 ou la revendication 3, caractérisée en ce que le fond (26 ; 260) de l'élément en forme de cloche cylindrique (20) comporte au moins un orifice (22 ; 220) de raccordement aux moyens d'admission de fluide sous pression (13, 13').

5. Direction assistée selon l'une des revendications précédentes, caractérisée en ce que la périphérie de la membrane (31) est montée entre l'extrémité annulaire de l'élément en forme de cloche (20) et le corps (10).

6. Direction assistée selon l'une des revendications 1 à 4, caractérisée en ce que la périphérie de la membrane (31) est montée contre la périphérie interne du fond (26 ; 260) de l'élément en forme de cloche (20).

7. Direction assistée selon l'une des revendications précédentes, caractérisée en ce que la crémaillère (11) est guidée axialement dans une zone centrale ($10_1$) de profil interne correspondant du corps (10).

8. Direction assistée selon la revendication 7, caractérisée en ce que l'ensemble organe support tubulaire (24)/tige (40) est monté en porte-à-faux sur l'extrémité adjacente de la crémaillère (11).

9. Direction assistée selon la revendication 7 ou la revendication 8, caractérisée en ce que la crémaillère (11) comprend une face d'appui (112) perpendiculaire à sa zone dentée et coulissant contre une face correspondante (113) de la paroi latérale du corps (10).

10. Direction assistée selon l'une des revendications 7 à 9, caractérisée en ce que les moyens (16, 17) de connection de la crémaillère aux biellettes d'actionnement (18) sont situés au niveau de la zone dentée de la crémaillère (11).

11. Direction assistée selon la revendication 9 ou la revendication 10, caractérisée en ce que les moyens de connection comprennent des éléments d'axe (16) reçus à coulissement dans une fenêtre oblongue (14) de ladite paroi latérale du corps (10).

12. Direction assistée selon la revendication 11, caractérisée en ce que la crémaillère (11) présente un profil transversal en forme de L, une première (110) des branches du L formant la zone dentée et la seconde branche (111) du L formant ladite face d'appui (112).

13. Direction assistée selon la revendication 12, caractérisée en ce que la crémaillère (11) est maintenue en engagement avec le pignon (12) par un organe d'appui élastique (15) portant contre la face de la première branche (111) du L opposée à la zone dentée.

14. Direction assistée selon l'une des revendications 1 à 4, caractérisée en ce que le premier moyen de piston (30) à membrane roulante (31) est relié à la crémaillère (11) par une tige creuse (40', 400), et en ce qu'elle comprend un second moyen de piston (41) porté par ladite tige (40', 400) et coulissant de façon étanche par rapport à un élément stationnaire allongé (500) s'étendant centralement dans le corps (10).

15. Direction assistée selon la revendication 14, caractérisée en ce que l'élément stationnaire central (500) est connecté en bout par un raccord articulé (45, 45') à l'élément en forme de cloche formant cylindre (20, 20').

16. Direction assistée selon la revendication 15, caractérisée en ce que l'élément stationnaire central (500) s'étend longitudinalement au travers de la crémaillère (11).

17. Direction assistée selon la revendication 16, caractérisée en ce que la crémaillère (11) est guidée centralement à coulissement étanche (43) sur l'élément stationnaire central (500).

18. Direction assistée selon la revendication 17, caractérisée en ce que la crémaillère (11) définit intérieurement avec l'élément stationnaire central (500) une chambre de pression annulaire (501) pour le second moyen de piston (41), alimentée en fluide de travail par un canal formé dans l'élément stationnaire central (500) et débouchant dans l'élément en forme de cloche cylindrique (20, 20').

19. Direction assistée selon la revendication 18, comprenant deux premiers moyens de piston à membrane (30a, 30b) en opposition de part et d'autre de la crémaillère (11), caractérisée en ce que l'élément stationnaire central (500) est un tube connecté par chacune de ses extrémités opposées à l'élément en forme de cloche cylindrique correspondant (20a, 20b ; 20′a, 20′b) par un raccord creux (45 ; 45′), et comporte une cloison étanche centrale (44).

20. Direction assistée selon la revendication 18 ou la revendication 19, caractérisée en ce que la tige (400) du premier moyen de piston (30) est reliée à une partie médiane centrale (401) de la crémaillère (11), le premier moyen de piston à membrane (30) étant reçu au moins partiellement dans la crémaillère (11).

21. Direction assistée selon la revendication 20, caractérisée en ce que le premier moyen de piston à membrane (30) comprend un organe tubulaire (50) associé à la membrane (31) et reçu à coulissement dans un alésage (420) de la crémaillère (11).

22. Direction assistée selon la revendication 21, caractérisée en ce que l'organe tubulaire (50) est monté à coulissement sur une prolongation tubulaire intérieure (52) de l'élément en forme de cloche (20′).

**Claims**

1. Servo steering of the central output type, comprising : a body (10) forming a housing for a pinion (12) and rack (11) assembly, at least one cylinder (20 ; 20′) prolongating the body in a direction parallel to the rack, at least a first piston means (30) disposed in the cylinder and connected to the rack by a rod (40 ; 40′ ; 400), means (13 ; 13′) for selectively admitting a subpressure fluid into the cylinder at least at the side of the first piston means opposite the rod, and output means (16, 17) for connecting the rack (11)/rod (40 ; 40′ ; 400)/first piston means (30) assembly to a linkage (18) for actuating steerable wheels, characterized in that the cylinder is comprised of a cylindrical bell-shaped element (20 ; 20′) joined to one end of the body (10), the first piston means (30) being formed by a rolling diaphragm (31) connected at its periphery to the cylindrical bell-shaped element (20), and of a tubular support member (24) fixed to the rod (40 ; 40′ ; 400) and coaxial thereto, and in that the output means (16, 17) are connected to the rack (11) and traverse a lateral wall of the body (10).

2. Servo steering according to claim 1, characterized in that it comprises a pair (30a, 30b) of said first piston means which are disposed opposite to each other on either side of the rack (11), each being disposed in one of said bell-shaped elements (20a, 20b).

3. Servo steering according to claim 1 or claim 2, characterized in that the cylindrical bell-shaped element (20) is formed by deep-drawing.

4. Servo steering according to claim 2 or claim 3, characterized in that the bottom (26 ; 260) of the cylindrical bell-shaped element (20) comprises at least one orifice (22 ; 220) for connection to means for admitting a pressure fluid (13 ; 13′).

5. Servo steering according to any of the preceding claims, characterized in that the periphery of the diaphragm (31) is mounted between the angular extremity of the bell-shaped element (20) and the body (10).

6. Servo steering according to any of claims 1 to 4, characterized in that the periphery of the diaphragm (31) is mounted against the internal periphery of the bottom (26 ; 260) of the bell-shaped element (20).

7. Servo steering according to any of the preceding claims, characterized in that the rack (11) is axially guided in a central zone $(10_1)$ of a corresponding internal profile of the body (10).

8. Servo steering according to claim 7, characterized in that the tubular support member (24)/rod (40) assembly is mounted in cantilever fashion on the adjacent end of the rack (11).

9. Servo steering according to claim 7 or claim 8, characterized in that the rack (11) comprises an engagement face (112) perpendicular to its toothing area and sliding on a corresponding face (113) of the lateral wall of the body (10).

10. Servo steering according to any of claims 7 to 9, characterized in that the means (16, 17) for connecting the rack to the linkage (18) are situated at the level of the toothing area of the rack (11).

11. Servo steering according to claim 9 or claim 10, characterized in that the connection means comprise axis elements (16) slidingly received in an elongated window (14) of said lateral wall of the body (10).

12. Servo steering according to claim 11, characterized in that the rack (11) presents a L-shaped transversal profile, a first (110) of the branches of the L forming the toothing area and the second branch (111) of the L forming said engagement face (112).

13. Servo steering according to claim 12, characterized in that the rack (11) is maintained in engagement with the pinion (12) by a resilient member (15) in engagement with the face of the first branch (111) of the L opposite the toothing area.

14. Servo steering according to any of claims 1 to 4, characterized in that the first piston means (30) comprising a rolling diaphragm (31) is connected to the rack (11) by a hollow rod (40′, 400) and in that it comprises a second piston means (41) carried by said rod (40′, 400) and sliding in a fluid-tight manner with respect to an elongated stationary element (500) extending centrally into the body (10).

15. Servo steering according to claim 14, characterized in that the central stationary element (500) is connected endwise to the cylindrical bell-shaped element (20, 20′) by an articulated connection (45, 45′).

16. Servo steering according to claim 15, characterized in that the central stationary element (500) extends longitudinally across the rack (11).

17. Servo steering according to claim 16, characterized in that the rack (11) is centrally guided in sliding and fluid-tight manner (43) on the central stationary element (500).

18. Servo steering according to claim 17, characterized in that the rack (11) defines internally with the central stationary element (500) an annular pressure chamber (501) for the second piston means (41) receiving a work fluid by a passage formed in the central stationary element (500) and opening into the cylindrical bell-shaped element (20, 20').

19. Servo steering according to claim 18 comprising two first piston means (30a, 30b) formed as diaphragms and disposed opposite to each other on either side of the rack (11), characterized in that the central stationary element (500) is a tube connected at each of its opposite ends to the corresponding cylindrical bell-shaped element (20a, 20b ; 20'a, 20'b) by a hollow connection (45 ; 45'), and comprises a central sealed wall (44).

20. Servo steering according to claim 18 or claim 19, characterized in that the rod (400) of the first piston means (30) is connected to a central median portion (401) of the rack (11), the first piston means (30) formed as a diaphragm being received at least partially within the rack (11).

21. Servo steering according to claim 20, characterized in that the first piston means (30) formed as a diaphragm comprises a tubular member (50) associated to the diaphragm (31) and slidingly received in a bore (420) of the rack (11).

22. Servo steering according to claim 21, characterized in that the tubular member (50) is slidingly mounted on an internal tubular extension (52) of the bell-shaped element (20').


**Patentansprüche**

1. Hilfslenkung mit zentralem Ausgang, mit einem Körper (10), der eine Aufnahme für eine Anordnung aus Zahnrad (12) und Zahnstange (11) bildet, mindestens einem Zylinder (20 ; 20'), der den Körper in einer Richtung parallel zur Zahnstange verlängert, mindestens einem ersten Kolben (30), der im Zylinder angeordnet und mit der Zahnstange durch eine Stange (40 ; 40'; 400) verbunden ist, Mitteln (13 ; 13') zum wahlweisen Zuführen eines unter Unterdruck stehenden Strömungsmittels in den Zylinder auf mindestens der der Stange gegenüberliegenden Seite des ersten Kolbens, und Ausgangsmitteln (16, 17) zum Verbinden der Anordnung aus Zahnstange (11), Stange (40 ; 40') und erstem Kolben (30) mit einem Lenkgestänge (18) zur Betätigung lenkbarer Räder, dadurch gekennzeichnet, daß der Zylinder gebildet wird von einem zylindrischen glockenförmigen Element (20 ; 20'), das an einem Ende des Körpers (10) angesetzt ist, wobei der erste Kolben (30) von einer Rollmembran (31) gebildet wird, sowie einem rohrförmigen Abstützteil (24), das an der Stange (40 ; 40'; 400) befestigt ist und koaxial zu diesem verläuft, und daß die Ausgangsmittel (16, 17) mit der Zahnstange (11) verbunden sind und sich durch eine Seitenwand des Körpers (10) erstrecken.

2. Hilfslenkung nach Anspruch 1, dadurch gekennzeichnet, daß sie ein Paar (30a, 30b) derartiger erster Kolben aufweist, die gegenüberliegend jeweils in einem besagten glockenförmigen Element (20a, 20b) beidseitig zur Zahnstange (11) angeordnet sind.

3. Hilfslenkung nach Anspruch 1 oder 2, dadurch gekennzeichnet, daß das zylindrische glockenförmige Element (20) durch Tiefziehen hergestellt ist.

4. Hilfslenkung nach Anspruch 2 oder 3, dadurch gekennzeichnet, daß der Boden (26 ; 260) des zylindrischen glockenförmigen Elementes (20) mindestens eine Öffnung (22 ; 220) zum Anschluß an Mitteln (13, 13') zum Zuführen eines Druckmittels aufweist.

5. Hilfslenkung nach einem der vorhergehenden Ansprüche, dadurch gekennzeichnet, daß der Umfang der Membran (31) zwischen dem ringförmigen Ende des glockenförmigen Elementes (20) und dem Körper (10) befestigt ist.

6. Hilfslenkung nach einem der Ansprüche 1 bis 4, dadurch gekennzeichnet, daß der Umfang der Membran (31) am Innenumfang des Bodens (26 ; 260) des glockenförmigen Elementes (20) befestigt ist.

7. Hilfslenkung nach einem der vorhergehenden Ansprüche, dadurch gekennzeichnet, daß die Zahnstange (11) in einem zentralen Bereich ($10_1$) mit einem Innenprofil entsprechend dem Körper (10) axial geführt ist.

8. Servolenkung nach Anspruch 7, dadurch gekennzeichnet, daß die Anordnung aus rohrförmigem Abstützteil (24) und Stange (40) auskragend am angrenzenden Ende der Zahnstange (11) angebracht ist.

9. Servolenkung nach Anspruch 7 oder 8, dadurch gekennzeichnet, daß die Zahnstange (11) eine Anlagefläche (112) aufweist, die senkrecht zu ihrem Verzahnungsbereich verläuft und an einer entsprechenden Fläche (113) der Seitenwand des Körpers (10) gleitet.

10. Hilfslenkung nach einem der Ansprüche 7 bis 9, dadurch gekennzeichnet, daß die Mittel (16, 17) zum Verbinden der Zahnstange mit dem Lenkgestänge (18) auf Höhe des Verzahnungsbereiches der Zahnstange (11) angeordnet sind.

11. Hilfslenkung nach Anspruch 9 oder 10, dadurch gekennzeichnet, daß die Verbindungsmittel Achskörper (16) aufweisen, die in einem länglichen Fenster (14) der Seitenwand des Körpers (10) gleitend untergebracht sind.

12. Hilfslenkung nach Anspruch 11, dadurch gekennzeichnet, daß die Zahnstange (11) ein Querprofil in Form eines L hat, wobei ein erster Schenkel (110) des L den Verzahnungsbereich und der zweite Schenkel (111) des L die besagte Anlagefläche (112) bildet.

13. Hilfslenkung nach Anspruch (12) dadurch gekennzeichnet, daß die Zahnstange (11) mit dem Zahnrad (12) durch einen elastischen Andrückkörper (15) in Eingriff gehalten wird, der an der dem Verzahnungsbereich gegenüberliegenden Fläche des ersten Schenkels (111) des L anliegt.

14. Hilfslenkung nach einem der Ansprüche 1 bis 4, dadurch gekennzeichnet, daß der als Rollmembran (31) ausgebildete erste Kolben (30) mit der Zahnstange (11) durch eine hohle Stange (40', 400) verbunden ist und daß sie einen zweiten Kolben (41) aufweist, der von der Stange (40', 400) getragen wird und bezüglich eines länglichen stationären Teiles (500) abgedichtet gleitet, das zentral im Körper (10) verläuft.

15. Hilfslenkung nach Anspruch 14, dadurch gekennzeichnet, daß das zentrale stationäre Teil (500) endseitig durch einen Gelenkanschluß (45, 45') mit dem zylindrischen glockenförmigen Element (20, 20') verbunden ist.

16. Hilfslenkung nach Anspruch 15, dadurch gekennzeichnet, daß das zentrale stationäre Teil (500) in Lenkungsrichtung über die Zahnstange (11) verläuft.

17. Hilfslenkung nach Anspruch 16, dadurch gekennzeichnet, daß die Zahnstange (11) zentral auf dem zentralen stationären Teil (500) gleitend und abgedichtet (43) geführt ist.

18. Hilfslenkung nach Anspruch 17, dadurch gekennzeichnet, daß die Zahnstange (11) mit dem zentralen stationären Teil (500) innen eine ringförmige Druckkammer (501) für den zweiten Kolben (41) bildet, der durch einen im zentralen stationären Teil (500) gebildeten Kanal mit einem Arbeitsmittel beaufschlagt wird und in dem zylindrischen glockenförmigen Element (20, 20') mündet.

19. Hilfslenkung nach Anspruch 18 mit zwei als Membran ausgebildeten ersten Kolben (30a, 30b), die beidseitig zur Zahnstange (11) einander gegenüberliegen, dadurch gekennzeichnet, daß das zentrale stationäre Teil (500) ein Rohr ist, das an jedem seiner entgegengesetzten Enden mit dem entsprechenden zylindrischen glockenförmigen Element (20a, 20b ; 20'a, 20'b) durch einen hohlen Anschluß (45 ; 45') verbunden ist, und eine zentrale abgedichtete Wand (44) aufweist.

20. Hilfslenkung nach Anspruch 18 oder 19, dadurch gekennzeichnet, daß die Stange (400) des ersten Kolbens (30) mit einem zentralen medianen Abschnitt (401) der Zahnstange (11) verbunden ist, wobei der als Membran ausgebildete erste Kolben (30) zumindest teilweise in der Zahnstange (11) untergebracht ist.

21. Hilfslenkung nach Anspruch 20, dadurch gekennzeichnet, daß der als Membran ausgebildete erste Kolben (30) ein rohrförmiges Teil (50) aufweist, das der Membran (31) zugeordnet ist und von einer Bohrung (420) der Zahnstange (11) gleitend aufgenommen wird.

22. Hilfslenkung nach Anspruch 21, dadurch gekennzeichnet, daß das rohrförmige Teil (50) auf einer inneren rohrförmigen Verlängerung (52) des glockenförmigen Elementes (20') gleitend gelagert ist.

FIG.1

FIG.5

0 119 922

0 119 922

FIG_2

FIG_3

FIG_4

2

FIG.6

FIG.7

0 119 922

FIG. 8

FIG. 9

0 119 922